(19) Europäisches Patentamt
European Patent Office
Office européen des brevets

(11) Veröffentlichungsnummer: **0 172 516**
**B1**

(12) # EUROPÄISCHE PATENTSCHRIFT

(45) Veröffentlichungstag der Patentschrift: **17.11.88**

(51) Int. Cl.⁴: **C 08 G 81/02**

(21) Anmeldenummer: **85110090.9**

(22) Anmeldetag: **12.08.85**

(54) **Polymere mit einem Styrol-Acrylnitril-Copolymeren als Hauptkette und über Benzyletherbrücken gebundenen Polyphenylenether-Seitenketten und deren Verwendung zur Herstellung von Polymermischungen und Formkörpern.**

(30) Priorität: **25.08.84 DE 3431268**

(43) Veröffentlichungstag der Anmeldung: **26.02.86 Patentblatt 86/9**

(45) Bekanntmachung des Hinweises auf die Patenterteilung: **17.11.88 Patentblatt 88/46**

(84) Benannte Vertragsstaaten: **BE DE FR GB NL**

(56) Entgegenhaltungen:
**EP - A - 0 017 751**
**DE - A - 3 006 743**

(73) Patentinhaber: **BASF Aktiengesellschaft, Carl-Bosch-Strasse 38, D-6700 Ludwigshafen (DE)**

(72) Erfinder: **Taubitz, Christof, Dr., In der Dreispitz 15, D-6706 Wachenheim (DE)**
Erfinder: **Hambrecht, Juergen, Dr., Werderstrasse 30, D-6900 Heidelberg (DE)**
Erfinder: **Seiler, Erhard, Dr., Erpolzheimer Strasse 1, D-6700 Ludwigshaen (DE)**
Erfinder: **Pipper, Gunter, Schlangenthaler Weg 10, D-6702 Bad Duerkheim (DE)**

**EP 0 172 516 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Polymere mit Styrol und Acrylnitril enthaltenden Hauptketten und mit über Etherbrücken gebundenen Polyphenylenethern als Seitenketten.

Bei derartigen Polymeren handelt es sich um makromolekulare Stoffe, bei denen an Styrol und Acrylnitril enthaltenden Hauptketten Seitenketten aus einem anderen Polymeren gebunden sind. Die Herstellung von derartigen Polymeren bieten Möglichkeiten zur Verbesserung des Eigenschaftsbildes von Kunststoffen ohne Änderung der Monomerzusammensetzung.

Bei bekannten Polymeren aus Poly(phenylenethern) oder kurz Polyphenylenethern und Polystyrolen wird auf vorgelegtes Phenylenetherpolymer Styrol-homo- oder -copolymerisat aufgepfropft, wobei ein Styrolpolymerisat in den Seitenketten entsteht [vgl. EP-A1-17 751, US-Patent 4 338 410 und Chemical Abstracts 96, (1982), 69647 (JP-A1 80/53 968)]. Der Polyphenylether enthält wegen seiner breiten Molekulargewichtsverteilung grosse niedermolekulare Anteile, so dass ein erheblicher Teil des erhaltenen Pfropfpolymeren aus wenig Polyphenylenether besteht, was für die mechanischen Eigenschaften von Nachteil ist. Es wird ferner nicht angeregt eine Kopplung über Benzylchloridseitengruppen des Styrolpolymeren zu versuchen.

Es ist auch bereits bekannt, Blockcopolymere aus Polyphenylenether und Styrolhomo- oder -copolymeren herzustellen, die zu Formteilen verarbeitet werden können (vgl. US-Patente 4 221 881, 4 238 584 und 4 226 951). Bei diesen bekannten Verfahren werden polyfunktionelle Polystyrole mit Polyphenylenetherderivaten mehrfach gekoppelt. Die bekannten Produkte weisen den Nachteil auf, dass ihre Herstellung aufwendig und technisch umständlich ist.

In der Literatur sind auch bereits Pfropfpolymere beschrieben, bei denen Polyphenylenether auf Styrolcopolymere mit Maleinsäureanhydrid, Alkencarbonsäurechlorid, -carbonsäureester oder -carbonsäuren oder Glycidyl-methacrylat aufgepfropft sind [vgl. EP-A2 48 391, Chemical Abstracts 87, (1977), 69 109 (JP-A1 75/116 951) und Derwent Abstracts 430 783Y/23 (JP-B1-78/18 236)]. Nachteilig bei diesen bekannten Pfropfcopolymeren sind die schlechten Kopplungsausbeuten und die gegebenenfalls leichte Rückspaltbarkeit der erhaltenen Produkte.

In der EP-A1 156 990 ist vorgeschlagen, Pfropfpolymere aus Hydroxystyrolpolymerisaten bzw. -copolymerisaten und Polyphenylenether mit Hilfe eines Kopplungsmittels herzustellen. Dieses Verfahren weist den Nachteil auf, dass das eine Polymere in einem separaten Reaktionsschritt mit einem Kupplungsmittel umgesetzt werden muss.

Aufgabe der vorliegenden Erfindung war es, Polymere von Polyphenylenethern und Styrolpolymerisaten aufzufinden, welche die oben erwähnten Nachteile nicht aufweisen, sich durch gute mechanische Eigenschaften auszeichnen und, gegebenenfalls in Mischung mit anderen Polymeren, zur thermoplastischen Verarbeitung zu Formkörpern geeignet sind und einfach herstellbar sind.

Diese Aufgabe wurde durch Polymere gemäss Ansprüche 1 bis 7 gelöst.

Die erfindungsgemässen Polymeren weisen Durchschnittsmolekulargewichte (Gewichtsmittel $M_w$) von 5 000 bis 2 000 000, bevorzugt 20 000 bis 200 000 auf, wobei das Molekulargewicht jeweils gemessen wurde durch Gelpermeations-Chromatographie in 0,25-gewichtsprozentiger Tetrahydrofuranlösung bei 23°C und einer Durchflussgeschwindigkeit von 1,2 /ml/min (vgl. G. Glöckner, «Polymercharakterisierung durch Flüssigkeits-Chromatographie», Verlag A. Hüttig, Heidelberg, 1982).

Die neuen Polymeren enthalten Struktureinheiten bzw. Strukturelemente der eingangs gekennzeichneten allgemeinen Formeln (I) und (II) einpolymerisiert. Es handelt sich bei den Polymeren um makromolekulare Stoffe, die ganz oder im wesentlichen oder teilweise aus wiederkehrenden Einheiten der beiden Formeln (I) und (II) bestehen, worin der Formelteil [$-CH_2-CR^1-$) ein Teil der Polymerkette ist. Die Polymeren enthalten in den Seitenketten als Substituenten die $-Ar(-CH_2-O-PPO)_n$ und CN-Reste. Die erfindungsgemässen Polymeren bestehen entweder aus Copolymeren, welche nur die oben angeführten Struktureinheiten (I) und (II) enthalten oder aus Copolymeren, die neben den Struktureinheiten (I) und (II) noch andere Strukturelemente enthalten, die sich von anderen copolymerisierbaren olefinisch ungesättigten Verbindungen ableiten. Alle einpolymerisierten Struktureinheiten können statistisch, d.h. beliebig über die Hauptkette verteilt, alternierend und/oder blockartig im Copolymeren der Hauptkette verteilt sein. Derartige Anordnungen von Monomerheiten in Copolymeren sind an sich bekannt, so dass sich eine weitere Erläuterung erübrigt.

In der Struktureinheit der allgemeinen Formel (I):

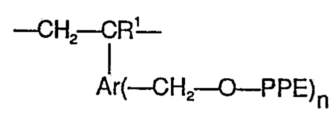 (I)

bedeutet $R^1$ Wasserstoff oder ein $C_1$- bis $C_8$-Rest, bevorzugt Wasserstoff oder ein Methylrest. Der Formelteil Ar bedeutet ein gegebenenfalls mit Alkyl- und/oder Arylresten substituierter aromatischer Rest mit 6 bis 14 C-Atomen, wobei ein Phenylenrest bevorzugt ist. Als gegebenenfalls alkylierte und/oder arylierte aromatische Reste kommen insbesondere solche der allgemeinen Formel:

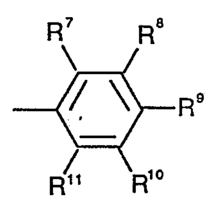

in Betracht, wobei $R^7$, $R^8$, $R^9$, $R^{11}$ bevorzugt Wasserstoff, Methyl, Ethyl oder Phenyl ist und mindestens ein Rest, höchstens aber drei Reste, die allgemeine Formel $-CH_2-O-PPE$ haben. Bevorzugt sind ein oder zwei $PPE-O-CH_2-$Reste im aromatischen Rest Ar vorhanden. Der in der Seitenkette der Struktureinheit (I) befindliche Formelteil O-PPE bedeutet dabei ein Poly(phenylenether)rest. Die Polyphenylenether, auch Polyphenylenoxide genannt, werden nach den bekannten Verfahren aus den entsprechenden Phenolen durch oxidative Kupplung hergestellt (vgl. US-Patente 3 306 879, 3,914,266, 3,956,442, 2,965,069, 3,972,851, 3,496,236, 3,367,978 und 4,140,675).

Bevorzugte Polyphenylenether haben die allgemeine Formel:

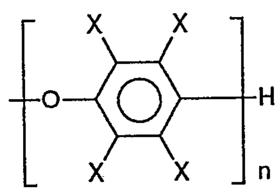

wobei n eine positive Zahl und vorzugsweise 20 bis 200 und X ein monovalenter Substituent wie Wasserstoff, Halogen, Kohlenwasserstoff oder Halogenkohlenwasserstoff mit mindestens 2 Kohlenstoffatomen zwischen dem Halogenatom und dem Phenylkern ist. Das Molekulargewicht (Gewichtsmittel $M_w$) des Polyphenylenetherrestes beträgt, bestimmt nach der oben angegebenen Methode, 500 bis 90 000, bevorzugt 10 000 bis 70 000.

Die Seitenketten bestehen bevorzugt aus:

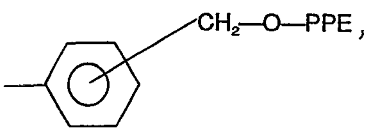

wobei für PPE beispielhaft genannt seien:

Poly(2,5-dilauryl-1,4-phenylen)ether, Poly(2,6-diphenyl-1,4-phenylen)ether, Poly(2,6-dimethoxy-1,4-phenylen)ether, Poly(2,6-diethoxy-1,4-poly-phenylen)ether, Poly(2-methoxy-6-ethoxy-1,4-phenylen)ether, Poly(2-ethyl-6-stearyloxy-1,4-phenylen)ether, Poly(2,6-dichlor-1,4-phenylen)ether, Poly(2-methyl-6-phenyl-1,4-phenylen)ether, Poly(2,6-dibenzyl-1,4-phenylen)ether, Poly(2-ethoxy-1,4-phenylen)ether, Poly(2-chlor-1,4-phenylen)-ether, Poly(2,5-dibrom-1,4-phenylen)ether. Ebenfalls geeignet sind Copolymere von verschiedenen Phenolen, wie 2,6-Dimethylphenol und 2,3,6-Trimethylphenol. Besonders bevorzugt sind Poly(2,6-dimethyl-1,4-phenylen)ether, Poly(2,6-diethyl-1,4-phenylen)ether, Poly(2-methyl-6-ethyl-1,4-phenylen) ether, Poly(2-methyl-6-propyl-1,4-phenylen) ether, Poly(2,6-dipropyl-1,4-phenylen)ether und Poly(2-ethyl-6-propyl-1,4-phenylen)ether. Insbesondere bevorzugt sind Polymere, bei denen PPE ein Poly(2,6-dimethyl-1,4-phenylenether und $R^1$ Wasserstoff ist.

Die Struktureinheit der allgemeinen Formel (I) ist in den erfindungsgemässen Polymeren bevorzugt in Mengen von 0,05 bis 99, besonders bevorzugt von 0,5 bis 20 Gewichtsprozent enthalten.

Bei der in den polymeren Einheiten der Hauptkette vorhandenen Einheit (II):

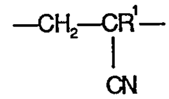 (II)

handelt es sich um einpolymerisierte, Nitrilgruppen enthaltende Monomere, wobei $R^1$ = H oder ein $C_1$- bis $C_8$-Alkylrest, bevorzugt H oder $CH_3$, d.h. bevorzugt handelt es sich um Acrylnitril oder Methacrylnitril. Die Struktureinheit der allgemeinen Formel (II) ist in den erfindungsgemässen Polymeren bevorzugt in Mengen von 1 bis 45, insbesondere 8 bis 40 Gewichtsprozent enthalten.

Bevorzugt sind Polymere, die nur aus den Struktureinheiten (I) und (II) bestehen. In diesem Falle sind die Struktureinheiten (I) bevorzugt in Mengen von 92 bis 60 und die Struktureinheiten (II) bevorzugt in Mengen von 8 bis 40 Gewichtsprozent im binären Copolymeren enthalten.

Besonders bevorzugt sind auch Terpolymere, die neben den Struktureinheiten (I) und (II) noch zusätzlich die Strukturelemente (III)

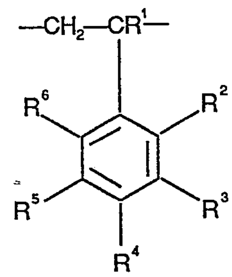 (III)

enthalten, wobei $R^1$ = Wasserstoff oder ein $C_1$-bis $C_8$-Alkylrest, insbesondere Wasserstoff oder ein Methylrest und $R^2$ bis $R^6$ = Wasserstoff, $C_1$- bis $C_8$-Alkyl, Halogen, CN, $NO_2$ oder COOH, insbesondere Wasserstoff oder Methyl, sind. Die Monomeren der Einheit (III) enthalten keine Chlormethylgruppen. Die Einheit der allgemeinen Formel (III) ist in den bevorzugten Terpolymeren bevorzugt in Mengen von 0 bis 99, insbesondere 50 bis 91,5 Gewichtsprozent, enthalten. Ein besonders bevorzugtes Terpolymerisat besteht aus 0,5 bis 10 Gewichtsprozent der Einheit (I), 8 bis 40 Gewichtsprozent der Einheit (II) und 50 bis 91,5 Gewichtsprozent der Einheit (III).

Die erfindungsgemässen Polymeren können ausser den Struktureinheiten (I) und (II) und gegebenenfalls (III) zusätzlich noch andere Strukturelemente enthalten, die von einer oder mehreren copolymerisierbaren olefinisch ungesättigten Verbindungen abstammen. Diese Struktureinheiten sind im Polymeren bevorzugt in Mengen von 0 bis 45 Gewichtsprozent enthalten und sie leiten sich bevorzugt ab von den Monomeren (Meth)acrylsäureester aus Alkanolen, (Methyl)acrylamide. Diene wie Butadien, Dimethylbutadien oder Isopren. Die Prozentzahlen aller Struktureinheiten im Polymeren sollen sich zu 100 addieren.

Die erfindungsgemässen Polymeren können auf verschiedenen Wegen hergestellt werden.

Bevorzugt kann zuerst das Polymere mit den Struktureinheiten

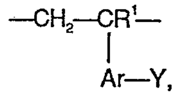

wobei Y = $CH_3$ oder $CH_2Cl$
und

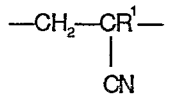

hergestellt werden. Dieses kann bei Y = $CH_3$, gemäss den im US-Patent 2 694 702 beschriebenen Verfahren zu einer Chlormethylgruppe umgesetzt werden. Vorzugsweise ist Y aber von vornherein gleich $CH_2Cl$. Das die Chlormethylgruppe enthaltende Polymere wird anschliessend mit Polyphenylenether zu den erfindungsgemässen Polymeren mit Polyphenylenetherseitenketten umgesetzt.

Nach einer anderen bevorzugten Herstellmethode wird der Polyphenylenether mit vorzugsweise Chlormethylstyrol zu einem Macromeren der allgemeinen Formel:

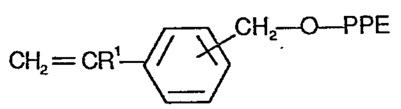

umgesetzt und anschliessend mit den Monomeren

$CH_2{=}CR^1\text{-}CN$

und gegebenenfalls anderen Monomeren copolymerisiert.

Die Polymerisation zur Bildung der Hauptkette kann nach den üblichen Verfahren durchgeführt werden, so in Lösung, Suspension, Emulsion oder in der Masse.

Die Kopplung des PPE kann in Lösung, Suspension, Schmelze oder Mehrphasenreaktion, wie z.B. Zweiphasenreaktion durchgeführt werden. Beispielhaft seien die Vorschriften gemäss «Crown Ethers and Phase Transfer Catalysis in Polymer Science» von L.J. Mathias, Plenum Press, New York, 1984, Seiten 1 bis 26, genannt.

Die erhaltenen Produkte werden durch Umfällen gemäss US-Patent 3 644 227 charakterisiert. In Dichlormethan ($CH_2Cl_2$) ist das Styrol-Acrylnitril-Polymer (= SAN) löslich, das PPE bildet mit Dichlormethan einen unlöslichen Komplex. Das erfindungsgemässe Pfropfcopolymere wird in Dichlormethan zum Sieden erhitzt, bis sich gerade alles gelöst hat. Nach Abkühlen fällt der PPE-$CH_2Cl_2$-Komplex und PPE-reiches SAN aus. SAN und PPE-armes SAN bleiben in Lösung.

Die erfindungsgemässen Polymeren können in der üblichen Weise modifiziert werden. Sie können daher z.B. Verstärkungs- und Füllstoffe, Stabilisatoren, Gleit- und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Es ist ein Vorteil der erfindungsgemässen Polymeren, dass sie mit anderen Polymeren mischbar sind. Ein weiterer Vorteil besteht darin, dass sich die Polymeren und insbesondere deren Mischungen mit anderen Polymeren für die Verarbeitung durch Extrusion, Extrusionsblasen, Spritzgiessen oder sonst üblichen Verarbeitungstechniken zu Folien oder Formkörpern eignen.

Beispiel 1

Durch kontinuierliche Copolymerisation von 60 Gew.% Styrol, 35 Gew.% Acrylnitril, 3 Gew.% m-Chlormethylstyrol und 2 Gew.% p-Chlormethyl-styrol stellt man unter Zusatz von 60 Gew. Teilen Ethylbenzol, bezogen auf 100 Gew. Teile Monomere, bei 150°C und 9 bar bei 5 h Verweilzeit ein Copolymeres mit statistischer Verteilung der Monomeren und mit $M_w$ = 22 000 her. Das Copolymer wird über einen Extruder entgast und als Granulat gewonnen. 50 g des getrockneten Copolymeren gibt man in 1 000 ml Toluol, anschliessend fügt man 20 g PPE (hergestellt gemäss US-Patent 3,914,266 mit einem Molekulargewicht $M_w$ = 34 000) hinzu und erwärmt auf 90°C. Nach Abkühlen auf 30°C fügt man sofort 50 ml einer 50 gew.%igen wässrigen Natronlauge zu und rührt stark. Nach 5 min fügt man 5 g Tetrabutylammonium-hydrogensulfat zu. Man rührt 4 h bei Raumtemperatur und erwärmt in 1 h auf 60°C. Man hält die Reaktion 1 h bei 60°, fügt anschliessend 500 ml Toluol zu und kühlt auf Raumtemperatur. Man schüttelt mit Wasser aus und fällt das Polymere in Methanol.

Beispiel 2

Durch kontinuierliche thermische Copolymerisation von 64 Gew.% Styrol, 25 Gew.% Acrylnitril, 5 Gew.% Methylmethacrylat, 3,6 Gew.% m-Chlormethylstyrol und 2,4 Gew.% p-Chlormethylstyrol stellt man unter Zusatz von 60 Gew. Teilen Ethylbenzol, bezogen auf 100 Gew.-Teile Monomere, bei 142°C und 7 bar bei 6 h Verweilzeit ein Copolymeres mit statistischer Verteilung der Monomeren und mit $M_w$ = 35 000 her. Das Copolymer wird über einen Extruder entgast und als Granulat gewonnen. 50 g des getrockneten Copolymeren gibt man in 1 000 ml Toluol, anschliessend fügt man 40 g PPE mit einem Molekulargewicht $M_w$ von 42 000 hinzu und erwärmt auf 90°C. Nach Abkühlen auf 30°C fügt man sofort 50 ml einer 50 gew.%igen wässrigen Natronlauge zu und rührt stark. Nach 5 min fügt man 5 g Tetrabutylammoniumhydrogensulfat zu. Man rührt 4 h bei Raumtemperatur und erwärmt in 1 h auf 60°C. Man hält die Reaktion 1 h bei 60°C, fügt anschliessend 500 ml Toluol zu und kühlt auf Raumtemperatur. Man schüttelt mit Wasser aus und fällt das Polymere in Methanol.

Beispiel 3

Durch kontinuierliche Copolymerisation von 60 Gew.% p-Methylstyrol, 35 Gew.% Acrylnitril, 3 Gew.% m-Chlormethylstyrol und 2 Gew.% p-Chlor-methylstyrol stellt man unter Zusatz von 60 Gew.-Teilen Ethylbenzol, bezogen auf 100 Gew.-Teile Monomere, bei 150°C und 9 bar bei 5 h Verweilzeit ein Copolymeres mit statistischer Verteilung der Monomeren und mit $M_w$ = 25 000 her. Das Copolymer wird über einen Extruder entgast und als Granulat gewonnen. 50 g des getrockneten Copolymeren gibt man in 1 000 ml Toluol, anschliessend fügt man 15 g PPE ($M_w$ = 46 000) hinzu und erwärmt auf 90°C. Nach schnellem Abkühlen auf 30°C fügt man sofort 50 ml einer 50 gew.%igen wässrigen Kalilauge zu und rührt stark. Nach 5 min fügt man 5 g Tetrabutylammoniumhydrogensulfat zu. Man rührt 4 h bei Raumtemperatur und erwärmt in 1 h auf 60°C. Man fügt 500 ml Toluol zu und kühlt auf Raumtemperatur. Man schüttelt mit Wasser aus und fällt das Polymere in Methanol.

Beispiel 4

50 Gew.-Teile PPE mit einem Molekulargewicht $M_w$ von 22 000 werden in 500 Gew.-Teilen Toluol auf 80°C erwärmt. Man kühlt auf Raumtemperatur und fügt unter starkem Rühren 50 Gew.-Teile einer 50%igen wässrigen Natronlauge zu. Anschliessend setzt man 5 Gew.-Teile Tetrabutylammoniumhydrogensulfat zu, gefolgt von 4 Teilen eines Gemisches aus 60 Gew.-Teilen m-Chlormethylstyrol und 40 Gew.-Teilen p-Chlormethylstyrol. Man rührt 4 h bei Raumtemperatur nach. Nach Zusatz von 500 Gew.-Teilen Ethylbenzol schüttelt man mit Wasser aus, trocknet die Lösung und destillliert 500 Gew.-Teile Toluol über eine Kolonne ab. Zu der Lösung gibt man bei 75°C und 7 bar bei 5 h Verweilzeit kontinuierlich zu dem erfindungsgemässen Polymeren polymerisiert. Das Polymere wird in Methanol gefällt.

Beispiel 5

30 Gew.-Teile PPE ($M_w$ = 46 000) werden in 400 ml Toluol auf 80°C erwärmt. Man kühlt auf Raumtemperatur und fügt unter starkem Rühren 50 Gew.-Teile einer wässrigen Natronlauge zu. Anschliessend setzt man 5 Gew.-Teile Tetrabutylammoniumhydrogensulfat zu, gefolgt von 6 Gew.-Teilen eines Gemisches aus 60 Gew.-Teilen m-Chlormethylstyrol und 40 Gew.-Teilen p-Chlormethyl-styrol. Man rührt 4 h bei Raumtemperatur nach. Nach Zusatz von 500 Gew.-Teilen Ethylbenzol schüttelt man mit Wasser aus, trocknet die Lösung und destilliert 400 Gew.-Teile Toluol über eine Kolonne ab. Zu der Lösung gibt man bei 75°C 65 Gew.-Teile Styrol, 10 Gew.-Teile p-Chlorstyrol und 25 Gew.-Teile Acrylnitril. Das Gemisch wird bei 150°C und 7 bar bei 6 h Verweilzeit kontinuierlich zu dem erfindungsgemässen Polymeren polymerisiert. Das Polymere wird in Methanol gefällt.

Beispiel 6

20 Gew.-Teile PPE ($M_w$ = 25 000) und 20 Gew.-Teile PPE ($M_w$ = 46 000) werden in 500 ml Toluol auf 80°C erwärmt. Man kühlt schnell auf Raumtemperatur und fügt unter starkem Rühren 80 Gew.-Teile einer wässrigen Natronlauge zu. Anschliessend setzt man 8 Gew.-Teile Tetrabutylammoniumhydrogensulfat zu, gefolgt von 10 Gew.-Teilen eines Gemisches aus 60 Gew.-Teilen m-Chlormethylstyrol und 40 Gew.-Teilen p-Chlormethylstyrol. Man rührt 6 h bei Raumtemperatur nach. Nach Zusatz von 600 Gew.-Teilen Ethylbenzol schüttelt man mit Wasser aus, trocknet die Lösung und destilliert 50 ml über eine Kolonne ab. Zu der Lösung gibt man 120 Gew.-Teile Styrol und 35 Gew.-Teile Acrylnitril. Das Gemisch wird bei 150°C und 7 bar bei 6 h Verweilzeit kontinuierlich zu dem erfindungsgemässen Polymeren polymerisiert. Man dampft einen Teil des Lösungsmittels ab und entgast über einen Zweischneckenextruder.

Die Polymeren gemäss 1 bis 6 werden durch Umfällen aus Methylendichlorid gemäss US-Patent 3 644 227 charakterisiert. Dabei bildet das nicht an das Styrol-Acrylnitril-Copolymere gebundene PPE mit $CH_2Cl_2$ einen unlöslichen Komplex. Die ausgefallene Menge an PPE ist in Tabelle 1, Spalte 3 angegeben. Spalte 4 gibt die Vicat-Temperatur VST/B gemessen nach DIN 53 460 an.

| Beispiel | Gew.-% PPE im Polymeren | Gew.-% PPE aus $CH_2Cl_2$-Fällung | Vicat-Temperatur °C |
|---|---|---|---|
| 1 | 28,6 | 3,7 | 124 |
| 2 | 44,4 | 4,3 | 146 |
| 3 | 23,1 | 2,4 | 131 |
| 4 | 32,5 | 5,1 | 122 |
| 5 | 22,1 | 3,1 | 125 |
| 6 | 19,5 | kleiner 1,0 | 127 |

## Patentansprüche

1. Polymere mit Durchschnittsmolekulargewichten (Gewichtsmittel $M_w$) von 5 000 bis 2 000 000 die Struktureinheiten der allgemeinen Formel (I):

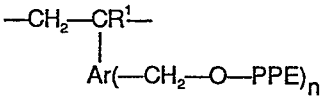

(I)

und (II)

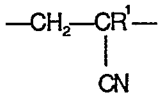

(II)

einpolymerisiert enthalten, worin $R^1$ = Wasserstoff oder ein $C_1$-bis $C_8$-Alkylrest, Ar = ein gegebenenfalls mit Alkyl- und/oder Arylresten substituierter aromatischer Rest mit 6 bis 14 C-Atomen, PPE = ein gegebenenfalls substitutierter Poly(phenylenether)rest mit $M_w$ von 500 bis 80 000 und worin n eine ganze Zahl von 1 bis 3 bedeutet.

2. Polymere nach Anspruch 1, dadurch gekennzeichnet, dass sie aus den Struktureinheiten (I) und (II) bestehen.

3. Polymere nach Anspruch 1, dadurch gekennzeichnet, dass sie aus den Struktureinheiten (I), (II) und einer dritten Struktureinheit (III) der allgemeinen Formel:

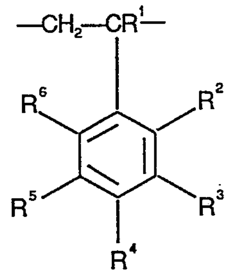

(III)

bestehen, worin $R^1$ die oben angegebene Bedeutung hat und $R^2$ bis $R^6$ Wasserstoff, $C_1$- bis $C_8$-Alkyl, Halogen, CN, $NO_2$ oder COOH sind.

4. Polymere nach Anspruch 1, dadurch gekennzeichnet, dass sie aus den Struktureinheiten (I), (II), gegebenenfalls (III) und anderen Strukturelementen bestehen, die sich von einer oder mehreren copolymerisierbaren olefinisch ungesättigten Verbindungen ableiten.

5. Polymere nach Anspruch 1, dadurch gekennzeichnet, dass Ar ein Phenylenrest ist.

6. Polymere nach Anspruch 1, dadurch gekennzeichnet, dass PPE Poly(2,6-dimethyl-1,4-phenylen)ether ist.

7. Polymere nach Anspruch 1, dadurch gekennzeichnet, dass n= 1.

8. Verwendung der Polymeren nach Anspruch 1 zur Herstellung von Mischungen mit anderen Polymeren.

9. Verwendung der Polymeren nach Anspruch 1, gegebenenfalls in Mischung mit anderen Polymeren, zur thermoplastischen Verarbeitung zu Formkörpern.

## Claims

1. A polymer which has a mean molecular weight (weight average $M_w$) of from 5,000 to 2,000 000 and contains, as copolymerized units, structural units of the formula (I):

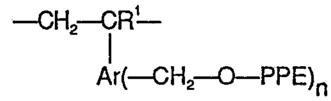

(I)

and (II):

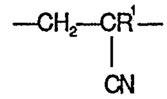

(II)

where $R^1$ is hydrogen or $C_1$-$C_8$-alkyl, Ar is an aromatic radical of 6 to 14 carbon atoms which is unsubstituted or substituted by alkyl and/or aryl radicals, PPE is an unsubstituted or substituted poly(phenylene ether) radical having an $M_w$ of from 500 to 80,000 and n is an integer from 1 to 3.

2. Polymer as claimed in claim 1, which consists of the structural units (I) and (II).

3. A polymer as claimed in claim 1, which consists of the structural units (I) and (II) and of a third structural unit (III) of the formula:

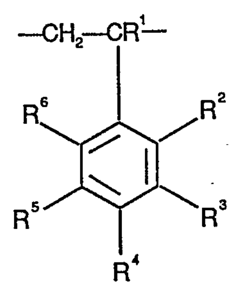

(III)

where $R^1$ has the above meanings and $R^2$ to $R^6$ are each hydrogen, $C_1$–$C_8$-alkyl, halogen, CN, $NO_2$ or COOH.

4. A polymer as claimed in claim 1, which consists of the structural units (I) and (II) and, if appropriate (III) and other structural elements which are derived from one or more copolymerizable oelfinically unsaturated compounds.

5. A polymer as claimed in claim 1, wherein Ar is a phenylene radical.

6. A polymer as claimed in claim 1, wherein PPE is poly(2,6-dimethyl-1,4-phenylene) ether.

7. A polymer as claimed in claim 1, wherein n is 1.

8. Use of a polymer as claimed in claim 1 for the preparation of blends with other polymers.

9. Use of a polymer as claimed in claim 1, if necessary as a mixture with othr polymers, for thermoplastic processing to give moldings.

**Revendications**

1. Polymères à poids moléculaires moyens (poids moléculaire moyen en poids $M_p$) de 5000 à 2 000 000, qui contiennent, en incorporation polymère, des unités structurales des formules générales (I):

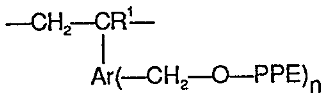

(I)

et (II):

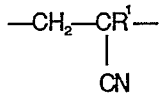

(II)

dans lesquelles $R^1$ représente un atome d'hydrogène ou un radical alkyle en $C_1$ à $C_3$, Ar représente un radical aromatique comportant de 6 à 14 atomes de carbone, éventuellement subsitué par des groupes alkyle et/ou aryle, PPE représente un radical poly(éther de phénylène) éventuellement substitué, possédant un $M_p$ de 500 à 80 000 et n représente un nombre entier dont la valeur varie de 1 à 3.

2. Polymères suivant la revendication 1, caractérisés en ce qu'ils se composent des unités structurales (I) et (II).

3. Polymères suivant la revendication 1, caractérisés en ce qu'ils se composent des unités structurales (I), (II) et d'une troisième unité structurale (III) de la formule générale:

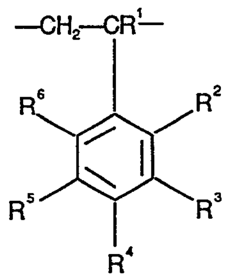

(III)

dans laquelle $R^1$ possède les significations qui lui ont été précédement attribuées et les symboles $R^2$ à $R^6$ représentent des atomes d'hydrogène, des radicaux alkyle en $C_1$ à $C_8$, des atomes d'halogènes, des radicaux CN, $NO_2$ ou COOH.

4. Polymères suivant la revendication 1, caractérisés en ce qu'il se composent des unités structurales (I), (II), éventuellement (III) et d'autres éléments structuraux, qui dérivent d'un ou plusieurs composés oléfiniquement insaturés, copolymérisables.

5. Polymères suivant la revendication 1, caractérisés en ce que Ar représente un radical phénylène.

6. Polymères suivant la revendication 1, caractérisés en ce que PPE représente le poly(éther de 2,6 diméthyl 1,4-phénylène).

7. Polymères suivant la revendication 1, caractérisés en ce que n'est égal à 1.

8. Utilisation des polymères suivant la revendication 1, pour la fabrication de mélanges avec d'autres polymères.

9. Utilisation des polymères suivant la revendication 1, éventuellement en mélange à d'autres polymères, pour la conversion par voie thermoplastique en corps ou articles moulés.